(19) Europäisches Patentamt
European Patent Office
Office européen des brevets

(11) **EP 1 741 950 A1**

(12) **EUROPÄISCHE PATENTANMELDUNG**

(43) Veröffentlichungstag:
**10.01.2007 Patentblatt 2007/02**

(51) Int Cl.:
***F16D 48/06*** *(2006.01)*

(21) Anmeldenummer: **05106134.9**

(22) Anmeldetag: **06.07.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **Getrag Ford Transmissions GmbH
50725 Köln (DE)**

(72) Erfinder:
• **Schmitz, Harald
44225, Dortmund (DE)**
• **Leibbrandt, Martin
50181, Bedburg (DE)**

(74) Vertreter: **Dörfler, Thomas
Ford-Werke GmbH
Patentabteilung NH/364
Henry-Ford-Strasse 1
50735 Köln (DE)**

(54) **Verfahren zur Ermittlung des Greifpunktes einer Kupplung**

(57) Die Erfindung betrifft ein Verfahren zur Ermittlung des Greifpunktes (GP) einer Kupplung (3). Das Verfahren startet bei einer vollständig geschlossenen Kupplung und ermittelt zwei Kupplungsstellungen (KS₂, KS₃), die zeitlich eng nebeneinander liegen und beide in die Berechnung des Greifpunktes (GP) eingehen. Während die Kupplungsstellung (KS₂) bei sich schließender Kupplung (3) ermittelt wird, wird die Kupplung bei Ermittlung der Kupplungsstellung (KS₃) geöffnet.

Fig.2

EP 1 741 950 A1

**Beschreibung**

Die Erfindung betrifft ein Verfahren zur Ermittlung des Greifpunktes einer Kupplung, also einer Kupplungsstellung, bei der beim Schließen der Kupplung gerade noch kein Drehmoment übertragen wird bzw. bei der beim Öffnen der Kupplung gerade noch ein Drehmoment übertragen wird.

Durch Betätigung der Kupplung lassen sich unterschiedliche Kupplungsstellungen einstellen, wodurch das übertragbare Moment zwischen einer Eingangsseite und einer Ausgangsseite der Kupplung variiert werden kann. So kann die Kupplung in einer vollständig geschlossenen Stellung ein maximales Moment übertragen, während bei einer vollständig geöffneten Stellung der Kupplung kein Moment zwischen Eingangsseite und Ausgangsseite übertragen wird.

Im Fahrzeugbau werden vermehrt Kupplungen verwendet, die durch ein Steuergerät automatisch angesteuert werden. Bei einer derartigen Ansteuerung ist die genaue Kenntnis des Greifpunktes von entscheidender Bedeutung für die Qualität der Kupplungsbetätigung.

Aus dem Stand der Technik sind Verfahren zur Ermittlung des Greifpunktes einer Kupplung bekannt. Beispielsweise ist ein Verfahren bekannt, bei dem die Kupplung zunächst geöffnet ist und die Ausgangsseite der Kupplung still steht, d.h. dass die Drehzahl der Ausgangsseite (im Folgenden Ausgangsdrehzahl genannt) gleich Null ist. Die Kupplung wird nun langsam bis zu einem Punkt geschlossen, in dem sich die Ausgangsseite in Bewegung setzt. Die so erreichte Kupplungsstellung kann dann ggf. mit Korrekturfaktoren als Greifpunkt verwendet werden.

Bei diesem Verfahren muss stets auf den Stillstand der Ausgangsseite der Kupplung gewartet werden, was bei einer betriebswarmen Kupplung nur selten eintreten kann. Des weiteren ist das Erkennen der Bewegung der Ausgangswelle relativ ungenau, da in der Regel die Drehung der Ausgangsseite über Zahnkränze diskret abgetastet und ermittelt wird, wodurch sich eine nicht unerhebliche Verzögerung der Bewegungserkennung ergeben kann. Diese hängt zudem von der zufälligen Stellung der Ausgangswelle zu Beginn des Vorgangs ab.

Ein anderes Verfahren wird in der DE 100 32 366 A1 beschrieben. Dabei handelt es sich um ein Verfahren, bei dem eine Kupplungskennlinie hinterlegt ist. Bei dieser Kupplungskennlinie handelt es sich um den Verlauf des übertragbaren Momentes in Abhängigkeit der Kupplungsstellung. Aus dieser Kupplungskennlinie lässt sich beispielsweise der Greifpunkt herauslesen, da - in Schließrichtung gesehen - ab dieser Kupplungsstellung die übertragbaren Drehmomente ungleich Null sind. Das Verfahren ermittelt durch Messungen und Berechnungen das übertragbare Drehmoment in einer bestimmten Kupplungsstellung und modifiziert die hinterlegte Kupplungskennlinie derart, dass das ermittelte Wertepaar Drehmoment/Kupplungsstellung auf der Kupplungskennlinie liegt. Aus der so modifizierten Kupplungskennlinie lässt sich näherungsweise der wirkliche Greifpunkt der vorliegenden Kupplung ablesen.

Um das übertragbare Drehmoment für eine bestimmte Kupplungsstellung durch Messungen zu ermitteln, wird die Kupplung von einer Kupplungsstellung, bei der kein Drehmoment übertragen wird, mit einer bestimmten Verstellgeschwindigkeit geschlossen. Das Schließen der Kupplung wird dann beendet, wenn die Ausgangsseite mit einer vorgegebenen Drehzahl rotiert, die kleiner ist als die Drehzahl, mit der sich die Eingangsseite der Kupplung dreht. Durch unterschiedliche Ansätze lässt sich, soweit die Ausgangsseite und die Eingangsseite jeweils mit konstanter Drehzahl rotieren, das in diesem Betriebspunkt übertragene Moment der Kupplung berechnen. Problematisch bei diesem Verfahren ist die Regelung der vorbestimmten Drehzahl der Ausgangsseite der Kupplung. Ist die Verstellgeschwindigkeit der Kupplung hoch, benötigt das Einregeln der Ausgangsdrehzahl eine nicht unwesentliche Zeit, da durch die systembedingten Verzögerungen bei der Erfassung der Ausgangsdrehzahl die Kupplung zunächst über die Kupplungsstellung hinaus geschlossen wird, bei der ein Drehmoment übertragen wird, das zum Halten der vorbestimmten Ausgangsdrehzahl notwendig ist. Diese systembedingten Schwierigkeiten bei der Einregelung der Ausgangsdrehzahl können durch eine kleinere Verstellgeschwindigkeit reduziert werden. Dies jedoch vergrößert die Zeitspanne, die für die Ermittlung des Greifpunktes benötigt wird. Somit benötigt das Verfahren der DE 100 32 366 eine gewisse Zeit, die nicht beliebig verkleinert werden kann. Ein mehrmaliges Durchlaufen des Verfahrens, um etwaige Messfehler erkennen und/oder ausgleichen zu können, ist bei einer Kupplung, die in einem Kraftfahrzeug eingebaut ist, im Betrieb des Kraftfahrzeugs nur mit merklichen Komforteinbußen möglich.

Auch die EP 0 635 391 B1 stellt ein Verfahren zur Ermittlung des Greifpunktes einer Kupplung vor. Auch hier wird für die Ausgangsseite der Kupplung eine Referenzdrehzahl festgelegt, die kleiner als die Drehzahl der Eingangsseite der Kupplung ist. Mit einer vergleichsweise hohen Verstellgeschwindigkeit wird die Kupplung so lange geschlossen, bis die Ausgangsseite die Referenzdrehzahl erreicht. Die derart ermittelte Kupplungsstellung wird in der EP 0 635 391 als angenäherter Greifpunkt bezeichnet. Wohl wissend, dass aufgrund der systembedingten Verzögerung bei der Erfassung der Referenzdrehzahl der Ausgangsseite der angenäherte Greifpunkt über dem wirklichen Greifpunkt liegt, wird, nachdem die Kupplung wieder geöffnet wird, die Kupplung nun mit einer wesentlich kleineren Verstellgeschwindigkeit ein zweites Mal geschlossen, bis wieder die Referenzdrehzahl der Ausgangsseite erreicht wird. Aufgrund der nun wesentlich kleineren Verstellgeschwindigkeit liegt der nun ermittelte Greifpunkt wesentlich näher an der Kupplungsstellung, ab dem in Schließrichtung gesehen ein Drehmoment übertragen wird. Wie auch bei dem Verfahren der DE 100 32 366 lässt sich hier das Verfahren nicht beliebig verkürzen, ohne Einbußen bei der Genauigkeit hinnehmen zu müssen.

Der Erfindung liegt daher die Aufgabe zugrunde, ein Verfahren zur Ermittlung des Greifpunktes einer Kupplung bereitzustellen, das den Greifpunkt möglichst genau und möglichst schnell erfasst.

Die der Erfindung zugrunde liegende Aufgabe wird mit dem Verfahren gemäß Anspruch 1 gelöst. Bevorzugte Ausführungen des erfindungsgemäßen Verfahrens können den Unteransprüchen entnommen werden.

Das Verfahren gemäß Anspruch 1 sieht vor, dass aus einer vorzugsweise vollständig geschlossenen Stellung die Kupplung bis zu einer ersten Kupplungsstellung geöffnet wird, in der kein Drehmoment zwischen der Eingangsseite und der Ausgangsseite übertragen wird. Aufgrund Reibung fällt dabei die Drehzahl der Ausgangsseite ab. Danach wird die Kupplung von der ersten Kupplungsstellung aus bis zu einer zweiten Kupplungsstellung geschlossen. In dieser zweiten Kupplungsstellung ist der Abfall der Drehzahl der Ausgangsseite gestoppt. Dies bedeutet, dass die Ausgangsdrehzahl in dem Zeitpunkt, in dem die zweite Kupplungsstellung erreicht wird, ein lokales Minimum aufweist oder bereits im Begriff ist, zu steigen. Nach dem Erfassen der zweiten Kupplungsstellung wird die Kupplung von der zweiten Kupplungsstellung bis zu einer dritten Kupplungsstellung geöffnet. In dieser dritten Kupplungsstellung fällt die Ausgangsdrehzahl wieder ab. Der Abfall ist dadurch zu erklären, dass das übertragbare Moment in der dritten Kupplungsstellung nicht ausreicht, das an der Ausgangsseite angreifende Reibmoment zu kompensieren, bzw. kein Moment von der Kupplung übertragen wird. Zur Ausgangsseite zählen bei einem Antriebsstrang eines Kraftfahrzeugs auch die Teile eines mit der Kupplung verbundenen Schaltgetriebes, die auch in einer Neutralstellung des Getriebes sich mit der Ausgangsseite der Kupplung drehen.

Nachdem die dritte Kupplungsstellung erfasst worden ist, kann die Lage des Greifpunktes als Funktion der ersten Kupplungsstellung und der zweiten Kupplungsstellung, d.h. in Abhängigkeit dieser beiden Stellungen, berechnet werden.

Eine bevorzugte Möglichkeit, den Greifpunkt zu berechnen, besteht in der gewichteten Mittelung der zweiten Kupplungsstellung und der dritten Kupplungsstellung. Die folgende Gleichung (i) gibt den Greifpunkt in Abhängigkeit der ersten Kupplungsstellung, der zweiten Kupplungsstellung und einem Gewichtungsfaktor f wieder. Der Gewichtungsfaktor f kann dabei Werte zwischen 0 und 1 annehmen und beispielsweise 0,5 betragen.

$$(i) \qquad GP = f * KS_2 + (1 - f) * KS_3$$

mit

GP      Greifpunkt,
$KS_2$      zweite Kupplungsstellung,
$KS_3$      dritte Kupplungsstellung, und
f      Gewichtungsfaktor $(0 \leq f \leq 1)$

Wie zu erkennen ist, hängt der Greifpunkt von zwei Werten ($KS_2$ und $KS_3$) ab, die während des Verfahrens durch Messungen kurz hintereinander erfasst werden. Somit besteht ein Vorteil des erfindungsgemäßen Verfahrens darin, dass etwaige Messfehler eines Wertes weniger stark auf den Greifpunkt durchschlagen.

In einem bevorzugten Ausführungsbeispiel erfolgt das Schließen der Kupplung von der zweiten Kupplungsstellung bis zu der dritten Kupplungsstellung mit einer konstanten Verstellgeschwindigkeit. Auch kann vorgesehen werden, dass das Öffnen der Kupplung nach der zweiten Kupplungsstellung bis zu der dritten Kupplungsstellung ebenfalls mit einer konstanten Verstellgeschwindigkeit erfolgt. Die Verstellgeschwindigkeiten zum Schließen der Kupplung bis zu der zweiten Kupplungsstellung und zum Öffnen der Kupplung nach der zweiten Kupplungsstellung können dabei betraglich gleich groß sein.

Die oben genannten Verstellgeschwindigkeiten, unabhängig davon, ob sie während des Schließens oder des Öffnens konstant und/oder betraglich gleich groß sind, können so gewählt werden, dass in Schließrichtung der Kupplung gesehen die zweite Kupplungsstellung mit Sicherheit hinter dem Greifpunkt liegt und die dritte Kupplungsstellung in Öffnungsrichtung der Kupplung gesehen mit Sicherheit ebenfalls hinter dem Greifpunkt liegt. Somit geben die zweite Kupplungsstellung und die dritte Kupplungsstellung einen Bereich für den Greifpunkt an. Dieser Bereich oder auch Abstand der beiden Kupplungsstellungen zueinander kann als Vertrauensbereich angesehen werden und gibt einen Hinweis auf die Güte des Verfahrens zur Greifpunktermittlung.

Es sei an dieser Stelle darauf hingewiesen, dass die Kupplungsstellungen $KS_2$ und $KS_3$ bei unterschiedlichen Kupplungsbewegungen ermittelt werden. Während sich bei Ermittlung der zweiten Kupplungsstellung die Kupplung schließt, wird sie bei Ermittlung der dritten Kupplungsstellung geöffnet. Somit wird die Wahrscheinlichkeit systematischer Fehler bei der Ermittlung des Greifpunktes reduziert.

Vorzugsweise hängt die zweite Kupplungsstellung von dem Zeitpunkt ab, in dem die zeitliche Ableitung der Ausgangsdrehzahl einen Wert gleich Null annimmt, wenn die Kupplung von der ersten Kupplungsstellung geschlossen wird. So kann die zweite Kupplungsstellung in einem gewissen zeitlichen Abstand, der beispielsweise durch die systembedingte Verzögerung der Erfassung des lokalen Minimums der Ausgangsdrehzahl vorgegeben ist oder auch in anderer Weise festgelegt ist, folgen. In der zweiten Kupplungsstellung wird unter Berücksichtigung der Verstellgeschwindigkeit in Schließrichtung ein höheres Reibmoment durch die Kupplung übertragen, als dies der Fall in dem Zeitpunkt ist, in dem die Ausgangsdrehzahl ihr lokales Minimum annimmt. Aufgrund des nun höheren Reibmomentes wird die Ausgangsseite beschleunigt. Mit anderen Worten: Die Lage der zweiten Kupplungsstellung wird durch die Lage des lokalen Minimums der Ausgangsdrehzahl bestimmt. Die zweite Kupplungsstellung folgt dabei dem lokalen Minimum in einem bestimmten zeitlichen Abstand.

Die dritte Kupplungsstellung kann, in analoger Weise wie die zweite Kupplungsstellung, von einem Zeitpunkt abhängen, in dem die zeitliche Ableitung der Ausgangsdrehzahl einen Wert gleich Null annimmt, wenn die Kupplung nach der zweiten Kupplungsstellung wieder geschlossen wird. Somit unterscheidet sich der Zeitpunkt, in dem die dritte Kupplungsstellung erreicht wird, von dem Zeitpunkt des lokalen Maximums der Ausgangsdrehzahl um eine bestimmte Zeitdifferenz, die ganz oder teilweise durch die zeitliche Verzögerung der Erfassung der zeitlichen Ableitung der Ausgangsdrehzahl ausgefüllt sein kann.

Vorzugsweise wird die zeitliche Ableitung oder Steigung der Ausgangsdrehzahl nach Erreichen der ersten Kupplungsstellung ermittelt. Da in der ersten Kupplungsstellung durch die Kupplung kein Kupplungsmoment auf die Ausgangsseite wirkt, entspricht das Reibmoment, das an der Ausgangsseite anliegt, dem Produkt aus dem Massenträgheitsmoment der Ausgangsseite und der zeitlichen Ableitung der Winkelgeschwindigkeit der Ausgangsseite (siehe Gleichung (ii)), die aus der zeitlichen Ableitung der Ausgangsdrehzahl direkt folgt.

$$\text{(ii)} \qquad M_R = J_A \cdot \dot{\omega}_{KS1}$$

mit

$M_R$     Reibmoment, das durch Drehung der Ausgangsseite gegeben ist,
$J_A$     Massenträgheitsmoment der Ausgangsseite, und
$\dot{\omega}_{KS1}$     zeitliche Ableitung der Winkelgeschwindigkeit der Ausgangsseite in der ersten Kupplungsstellung, in der die Kupplung kein Moment überträgt (kurz Bremsverzögerung genannt)

Bei Kenntnis des Massenträgheitsmomentes $J_A$ kann somit auf das Reibmoment geschlossen werden, das auf die Ausgangsseite wirkt. Um das Verfahren zur Ermittlung des Greifpunktes hinsichtlich benötigter Gesamtzeit und Genauigkeit zu optimieren, können die Verstellgeschwindigkeiten zum Schließen der Kupplung vor der zweiten Kupplungsstellung bzw. zum Öffnen nach der zweiten Kupplungsstellung in Abhängigkeit dieses Reibmomentes bzw. der zeitlichen Ableitung der Ausgangsdrehzahl in der ersten Kupplungsstellung festgelegt werden.

In der ersten Kupplungsstellung und/oder in der zweiten Kupplungsstellung kann die zeitliche Ableitung der Ausgangsdrehzahl erfasst werden. Anhand der zeitlichen Ableitung der Ausgangsdrehzahl (bzw. der Winkelgeschwindigkeit) beispielsweise in der ersten Kupplungsstellung kann auf das Moment geschlossen werden, das in der zweiten Kupplungsstellung durch die Kupplung von der Eingangsseite auf die Ausgangsseite übertragen wird. Die Gleichung (iii) stellt das Gleichgewicht der Momente dar, die auf die Ausgangsseite wirken, wenn sich die Kupplung in der zweiten Kupplungsstellung befindet. Analog kann diese Gleichung auch für die dritte Kupplungsstellung formuliert werden.

$$\text{(iii)} \qquad M_K = M_R + \dot{\omega}_{KS2} \cdot J_A$$

mit

$M_K$     Moment, das durch die Kupplung übertragen wird, und
$\dot{\omega}_{KS2}$     zeitliche Ableitung der Winkelgeschwindigkeit der Ausgangsseite in der zweiten Kupplungsstellung.

In einem bevorzugten Ausführungsbeispiel wird die Kupplung in der zweiten Kupplungsstellung und/oder in der dritten Kupplungsstellung für eine gewisse Zeit gehalten. In dieser Zeit ist das Moment, das durch die Kupplung übertragen wird, konstant, so dass auch gemäß Gleichung (iii) die zeitliche Ableitung der Winkelgeschwindigkeit und somit der Ausgangsdrehzahl, soweit das Reibmoment konstant ist, eine konstante Größe annimmt und sauber erfasst werden kann. Insbesondere kann die Kupplung in der zweiten Kupplungsstellung für eine längere Zeit gehalten werden, als dies für eine Erfassung der zeitlichen Ableitung der Ausgangsdrehzahl notwendig ist. Durch dieses Halten in der zweiten Kupplungsstellung wird sichergestellt, dass die Ausgangsseite nach Erreichen der zweiten Kupplungsstellung um einen bestimmten Betrag beschleunigt wird.

Unter Berücksichtigung des Massenträgheitsmoments der Ausgangsseite, der zeitlichen Ableitung der Ausgangsdrehzahl in einer Kupplungsstellung, in der die Kupplung kein Moment überträgt (kurz "Bremsverzögerung" genannt, vergleiche $\dot{\omega}_{KS1}$), der zeitlichen Ableitung der Ausgangsdrehzahl in der zweiten bzw. dritten Kupplungsstellung und unter Zugrundelegung einer Kupplungskennlinie, in der das übertragbare Moment über den Kupplungsverstellweg dargestellt ist, kann auf den Abstand zwischen der zweiten bzw. dritten Kupplungsstellung und dem Greifpunkt geschlossen werden. Auch reicht es in guter Näherung aus, lediglich die Steigung der Kupplungskennlinie im Greifpunkt zu hinterlegen und entsprechend zu berücksichtigen. Die Gleichung (iv) gibt den entsprechenden mathematischen Zusammenhang wieder.

$$(iv) \qquad M_R + \dot{\omega}_{KS2} \cdot J_A = M_K = \Delta x \cdot m_{KK,GP}$$

mit

$\Delta x$      Abstand zwischen zweiter Kupplungsstellung $KS_2$ und Greifpunkt; und

$m_{KK,GP}$      Steigung der Kupplungskennlinie (Moment über Verstellung) im Greifpunkt.

Durch obige Gleichung (iv) lässt sich ausgehend von der zweiten oder dritten Kupplungsstellung auf den wahrscheinlichen Greifpunkt schließen. Beim erfindungsgemäßen Verfahren kann nun wieder der Greifpunkt als gewichteter Mittelwert der Greifpunkte aufgefasst werden, die man einzeln anhand der Gleichung (iv) abschätzen kann. Mit Hilfe der Gleichungen (v) und (vi) lässt sich ein derartiger Mittelwert für den Greifpunkt berechnen.

$$(v) \qquad GP_2 = KS_2 - (\dot{\omega}_{KS1} + \dot{\omega}_{KS2}) \cdot J_A/m_{KK,GP}$$

mit

$GP_2$      Greifpunkt auf der Basis von der zweiten Kupplungsstellung $KS_2$ (analog $GP_3$)

$$(vi) \qquad GP = f \cdot GP_2 + (1 - f)\, GP_3$$

Die erste Kupplungsstellung kann zwischen einer vermuteten Position für den Greifpunkt und einer vollständig geöffneten Kupplungsstellung liegen, wobei sich die erste Kupplungsstellung vorzugsweise in der Nähe der vermuteten Position für den Greifpunkt befindet. Durch diese Maßnahme kann das Verfahren zur Ermittlung des Greifpunktes merklich verkürzt werden, da die Kupplung mit vorzugsweise kleiner Verstellgeschwindigkeit von der ersten Kupplungsstellung in die zweite Kupplungsstellung fährt. Beispielsweise kann die erste Kupplungsstellung von einem Wert für einen Greifpunkt abhängen, der bei einem vorangegangen Durchgang des Verfahrens ermittelt wurde.

Die Kupplung kann eine hydraulische Stellvorrichtung aufweisen, wobei vorzugsweise bei Nichtanliegen eines hydraulischen Drucks die Kupplung vollständig geschlossen ist ("normally closed"). Zwischen der vorzugsweise vollständig geschlossenen Kupplungsstellung und der ersten Kupplungsstellung kann die hydraulische Stellvorrichtung hydraulisch mit einem Ausgleichsbehälter verbunden werden. Dadurch lässt sich die Stellvorrichtung vor der Erfassung des Greifpunktes entlüften und etwaige Leckagen ausgleichen.

Anhand der Figuren soll die Erfindung in einem bevorzugten Ausführungsbeispiel näher erläutert werden. Es zeigen:

Figur 1      schematisch einen Teil eines Antriebsstrangs eines Kraftfahrzeugs;

Figur 2      die Stellung einer Kupplung und die Drehzahlen eines Motors und einer Ausgangsseite der Kupplung in Abhängigkeit der Zeit und

Figur 3    eine Kupplungskennlinie.

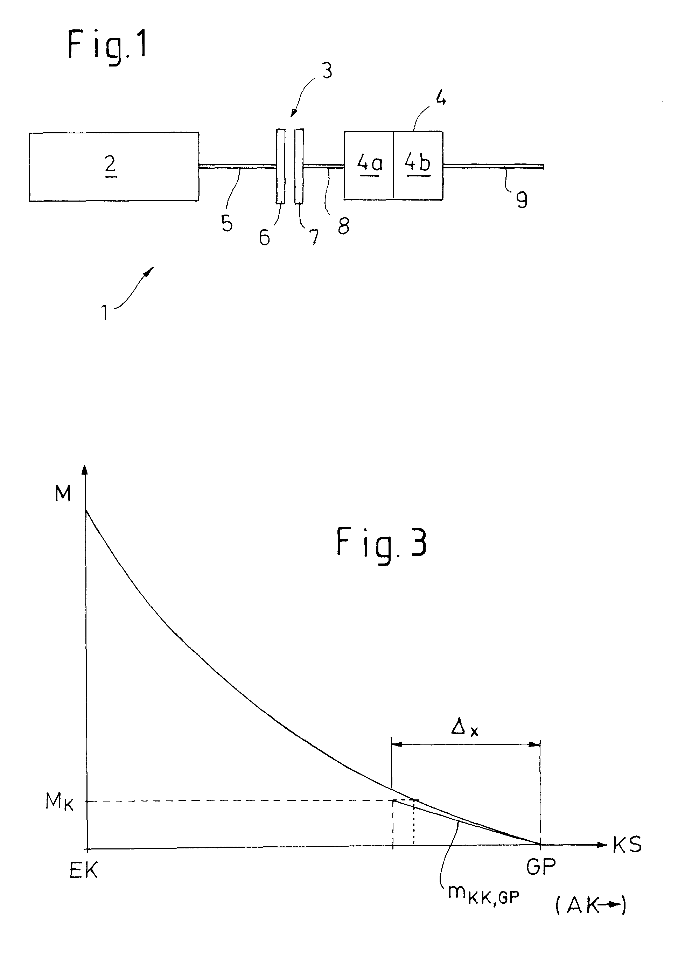

Figur 1 zeigt schematisch einen Teil eines mit 1 bezeichneten Antriebsstranges eines Kraftfahrzeuges. Der Antriebsstrang 1 umfasst einen Motor 2, eine Kupplung 3 und ein Getriebe 4, das als Schaltgetriebe mit mehreren Gängen ausgeführt ist. Der Motor 2 ist über eine Kurbelwelle 5 mit einer Eingangsseite 6 der Kupplung 3 verbunden. Eine Ausgangsseite 7 der Kupplung 3 ist drehfest mit einer Eingangswelle 8 des Getriebes 4 verbunden. Über mehrere, hier nicht weiter dargestellte Zahnradpaare des Getriebes 4 steht die Eingangswelle 8 des Getriebes 4 mit einer Ausgangswelle 9 in Eingriff. Die einzelnen Zahnradpaare bestehen jeweils aus wenigstens einem Festrad und wenigstens einem Losrad, wobei das Losrad durch eine dem Losrad zugeordnete Gangschaltkupplung mit der Welle drehfest verbunden werden kann, auf der das Losrad sitzt. Wird nun ein Gang des Getriebes 4 eingelegt, so überträgt das diesem Gang zugeordnete Zahnradpaar ein Drehmoment zwischen der Eingangswelle 8 und der Ausgangswelle 9. Ist hingegen kein Gang eingelegt (bei Neutralstellung) steht die Ausgangswelle 9 sowie die Festräder, die mit der Ausgangswelle 9 fest verbunden sind, bei stehendem Auto still, auch wenn sich die Eingangswelle 7 des Getriebes 4 dreht.

Wie der Figur 1 zu entnehmen ist, soll sich das Getriebe 4 in zwei Teile 4a, 4b gedanklich aufteilen lassen. Bei dem Teil 4a soll es sich um den Teil des Getriebes 4 handeln, der sich auch in Neutralstellung des Getriebes 4 mit der Eingangswelle dreht. Beim Teil 4b handelt es sich um den Teil des Getriebes 4, auf den in Neutralstellung des Getriebes 4 kein Drehmoment übertragen wird und, soweit das Kraftfahrzeug stillsteht, sich folglich nicht dreht.

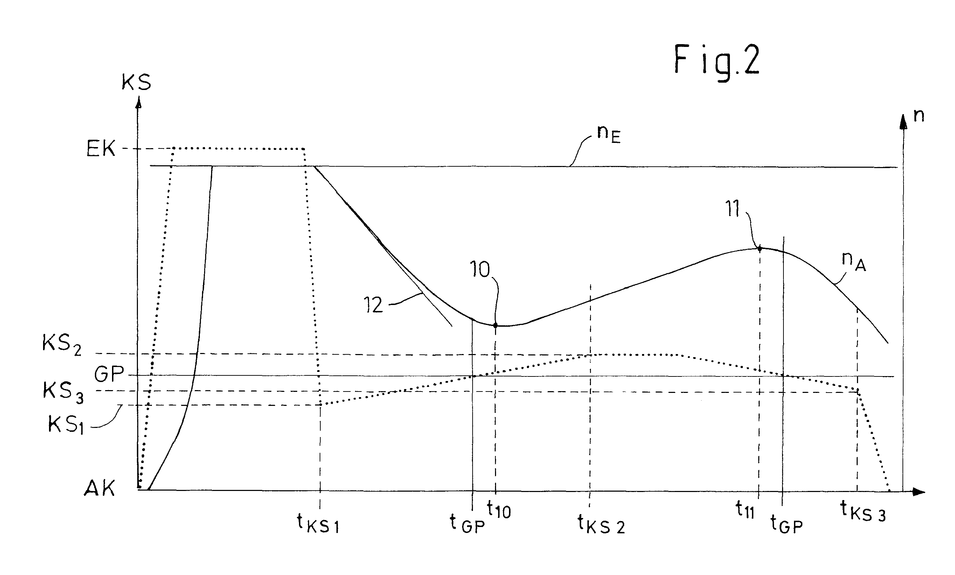

Figur 2 zeigt den zeitlichen Verlauf einer Kupplungsstellung für ein Ausführungsbeispiel des erfindungsgemäßen Verfahrens. Die Kupplungsstellung KS ist in Abhängigkeit der Zeit t dargestellt. Der Verlauf der Kupplungsstellung KS über der Zeit t wird durch die gepunktete Kurve gekennzeichnet. Der Wertebereich der Kupplungsstellung KS reicht von einer Auskuppelstellung AK bis zu einer Einkuppelstellung EK. Bei der Auskuppelstellung AK ist die Kupplung 3 vollständig geöffnet und überträgt kein Drehmoment. Bei der Einkuppelstellung EK ist die Kupplung 3 vollständig geschlossen und überträgt ihr maximales Drehmoment.

Figur 2 zeigt auch den Verlauf einer Drehzahl $n_A$ der Ausgangsseite 7 der Kupplung 3. Des weiteren zeigt die Figur 2 den Verlauf einer Drehzahl $n_E$ der Eingangswelle 8 der Kupplung 3. In Figur 2 ist diese Drehzahl $n_E$ während des Verfahrens konstant und entspricht der Drehzahl des Motors 2, vorzugsweise im Leerlauf.

Wie der Figur 2 zu entnehmen ist, wird die Kupplung 3 zunächst von der Auskuppelstellung AK mit einer vergleichsweise hohen Verstellgeschwindigkeit in die Einkuppelstellung EK gebracht. Dies bedeutet, dass die anfänglich offene Kupplung 3 vollständig geschlossen wird. Durch Schließen der Kupplung wird die Drehzahl $n_A$ der Ausgangsseite (oder Ausgangsdrehzahl $n_A$) hier von dem Wert $n_A = 0$ auf die Drehzahl des Motors ($n_E$) beschleunigt.

Nachdem die Kupplung in der Einkuppelstellung EK für eine gewisse Zeit gehalten wird, wird die Kupplung 3 geöffnet, wiederum mit einer vergleichsweise hohen Verstellgeschwindigkeit. Das Öffnen der Kupplung 3 erfolgt jedoch nicht bis zu der Auskuppelstellung AK, sondern bis zu einer ersten Kupplungsstellung $KS_1$. Zur Lage oder Auswahl der ersten Kupplungsstellung $KS_1$ ist bereits oben näher eingegangen worden.

Die erste Kupplungsstellung $KS_1$ ist dabei so gewählt, dass in dieser Stellung die Kupplung 3 mit Sicherheit kein Drehmoment überträgt. Aus dieser ersten Kupplungsstellung $KS_1$, die zum Zeitpunkt $t_{KS1}$ erreicht wird, wird nun die Kupplung mit einer konstanten, vergleichsweise kleinen Verstellgeschwindigkeit geschlossen. Da zum Zeitpunkt $t_{KS1}$ kein Drehmoment durch die Kupplung 3 übertragen wird, fällt die Ausgangsdrehzahl $n_A$ aufgrund Reibung ab. Dieser Abfall der Ausgangsdrehzahl $n_A$ wird noch nicht in dem Greifpunkt GP gestoppt, indem die Kupplung 3 in Schließrichtung, d.h. in Richtung EK gesehen, beginnt, ein Drehmoment zu übertragen. Das durch die Kupplung 3 übertragene Moment ist zunächst kleiner als das Reibmoment, das der Drehung der Ausgangsseite 7 der Kupplung 3 sowie des drehfest mit der Ausgangsseite 7 verbundenen Teils 4a des Getriebes 4 entgegenwirkt.

Kurz nach dem Zeitpunkt $t_{GP}$, in dem der Greifpunkt GP erreicht worden ist, nimmt die Ausgangsdrehzahl $n_A$ ein lokales Minimum ein, das mit 10 bezeichnet ist. In diesem Punkt 10 entspricht das Reibmoment dem durch die Kupplung übertragene Moment, so dass die Ausgangsseite 7 (inklusive der Eingangswelle 8 und dem Getriebeteil 4a des Getriebes 4) in diesem Punkt weder beschleunigt noch abgebremst wird. Da die Kupplung über den Zeitpunkt $t_{10}$ hinaus, in dem das lokale Minimum 10 erreicht worden ist, geschlossen wird, steigt das durch die Kupplung 3 übertragene Moment weiter an, wodurch die Ausgangsseite 7 wieder beschleunigt wird.

Das Schließen der Kupplung von der ersten Kupplungsstellung $KS_1$ endet in einer zweiten Kupplungsstellung $KS_2$. Diese zweite Kupplungsstellung $KS_2$ wird in einem Zeitpunkt $t_{KS2}$ erreicht. Die Lage der zweiten Kupplungsstellung $KS_2$ bzw. des Zeitpunktes $t_{KS2}$ hängt von der Lage des lokalen Minimums 10 bzw. von dem Zeitpunkt $t_{10}$ ab. So wird das Schließen von der ersten Kupplungsstellung $KS_1$ beendet, sobald unter Berücksichtigung systembedingter Verzögerungen im Verfahren ermittelt worden ist, dass die Ausgangsdrehzahl $n_A$ ein lokales Minimum aufweist. Es kann aber auch vorgesehen sein, dass nach Erfassung des lokalen Minimums 10 die Kupplung 3 über eine gewisse Zeitspanne weiter geschlossen wird. Die Kupplungsstellung $KS_2$ wird erfasst und abgespeichert.

Nachdem das Schließen der Kupplung nach Erreichen der zweiten Kupplungsstellung $KS_2$ gestoppt worden ist, wird die Kupplung in dieser Stellung für eine gewisse Zeit gehalten. Da in der zweiten Kupplungsstellung $KS_2$ das übertragene Moment der Kupplung 3 größer ist als das Reibmoment, wird die Ausgangsseite 7 wieder beschleunigt, d.h. die Ausgangsdrehzahl $n_A$ steigt weiter an. Es folgt nun aus der zweiten Kupplungsstellung $KS_2$ ein Öffnen der Kupplung, wobei auch hier eine vergleichsweise kleine Verstellgeschwindigkeit gewählt wird. In Figur 2 sind die Verstellgeschwindigkeiten zwischen der ersten Kupplungsstellung $KS_1$ und der zweiten Kupplungsstellung $KS_2$ einerseits und der zweiten Kupplungsstellung $KS_2$ und einer dritten Kupplungsstellung $KS_3$ betraglich gleich groß.

Da nun die Kupplung 3 wieder geöffnet wird, sinkt das übertragene Moment der Kupplung 3. Als Folge wird der Anstieg der Ausgangsdrehzahl $n_A$ geringer, bis ein lokales Maximum 11 erreicht wird. In diesem Punkt 11 halten sich das an der Ausgangsseite 7 angreifende Reibmoment und das Moment der Kupplung 3 die Waage. Nach Erreichen des lokalen Maximums 11 im Zeitpunkt $t_{11}$) fällt die Ausgangsdrehzahl $n_A$ wieder ab, obgleich die Kupplung noch ein (kleines) Moment überträgt. Schließlich wird der Greifpunkt GP wieder durchlaufen, so dass in Öffnungsrichtung gesehen nun kein Moment mehr übertragen wird. Folglich fällt die Ausgangsdrehzahl $n_A$ wieder ab. Nach Erfassen des lokalen Maximums 11 der Ausgangsdrehzahl $n_A$ wird das langsame Öffnen der Kupplung 3 gestoppt und die dritte Kupplungsstellung $KS_3$ erfasst und abgespeichert. Danach wird mit einer vergleichsweise hohen Verstellgeschwindigkeit die Kupplung 3 vollständig bis zu der Auskuppelstellung AK geöffnet.

Durch gewichtete Mittelung gemäß der oben aufgeführten Gleichung (i) kann aus der zweiten Kupplungsstellung $KS_2$ und der dritten Kupplungsstellung $KS_3$ der Greifpunkt GP in guter Näherung ermittelt werden. Die Lage der Kupplungsstellungen $KS_2$ und $KS_3$ in Abhängigkeit der Punkte 10, 11 kann durch die Wahl der Verstellgeschwindigkeit und ggf. durch das Vorsehen einer zusätzlichen Zeitspanne nach Erkennen der lokalen Extrema der Ausgangsdrehzahl $n_A$ so gewählt werden, dass der Greifpunkt GP mit Sicherheit zwischen den Kupplungsstellungen $KS_2$ und $KS_3$ liegt. Dadurch liefert das erfindungsgemäße Verfahren nicht nur einen Wert für den Greifpunkt GP, sondern auch einen Bereich, in dem der Greifpunkt mit Sicherheit liegt. Dieser Bereich kann als Gütemaß für das erfindungsgemäße Verfahren angesehen werden.

Unmittelbar nach Erreichen der ersten Kupplungsstellung $KS_1$ kann der Abfall der Ausgangsdrehzahl $n_A$ ermittelt werden, der in der Figur 2 mit 12 bezeichnet wird. Aus diesem Abfall der Ausgangsdrehzahl $n_A$ kann das Reibmoment $M_R$ der Ausgangsseite 7 ermittelt werden. Des weiteren können in den Punkten $t_{KS2}$ und $t_{KS3}$ ebenfalls die Gradienten der Ausgangsdrehzahl $n_A$ ermittelt werden, um über die Gleichung (iii) das übertragene Moment der Kupplung in diesen Punkten zu berechnen. Unter Zugrundelegung der Steigung der Kupplungskennlinie im Greifpunkt GP (vgl. Figur 3), $m_{KK,GP}$ kann daraus in guter Näherung der Abstand zwischen der betreffenden Kupplungsstellung $KS_2$, $KS_3$ und dem Greifpunkt GP mit Hilfe der Gleichung (iv) berechnet werden. Somit ergeben sich ausgehend von den Kupplungsstellungen $KS_2$, $KS_3$ zwei Schätzwerte $GP_2$, $GP_3$ für den Greifpunkt GP, die wiederum gemittelt werden können, um den Greifpunkt GP zu berechnen (siehe Gleichung (vi)).

Bezugszeichenliste

| 1 | Antriebsstrang |
|---|---|
| 2 | Motor |
| 3 | Kupplung |
| 4 | Getriebe (4a, 4b) |
| 5 | Kurbelwelle |
| 6 | Eingangsseite |
| 7 | Ausgangsseite |
| 8 | Eingangswelle |
| 9 | Ausgangswelle |
| 10 | lokales Minimum |
| 11 | lokales Maximum |
| 12 | zeitliche Ableitung |

| AK | Auskuppelstellung |
|---|---|
| EK | Einkuppelstellung |
| $KS_1$ | erste Kupplungsstellung |
| $KS_2$ | zweite Kupplungsstellung |
| $KS_3$ | dritte Kupplungsstellung |
| GP | Greifpunkt |
| $n_A$ | Drehzahl der Ausgangsseite (Ausgangsdrehzahl) |
| $n_E$ | Eingangsdrehzahl |
| t | Zeitpunkt |
| $m_{KK,GP}$ | Steigung der Kupplungskennlinie im Greifpunkt |

Δx       Abstand zum Greifpunkt

**Patentansprüche**

1. Verfahren zur Ermittlung des Greifpunktes (GP) einer Kupplung (3) mit einer Eingangsseite (6) und mit einer Ausgangsseite (7), die sich mit einer Ausgangsdrehzahl ($n_A$) dreht, wobei in Abhängigkeit einer Kupplungsstellung (KS) das übertragbare Moment zwischen Eingangsseite (6) und Ausgangsseite (7) variierbar ist, mit folgenden Schritten:

     a) Öffnen der Kupplung (3) aus einer vorzugsweise vollständig geschlossenen Stellung (EK) heraus bis zu einer ersten Kupplungsstellung ($KS_1$), in der kein Drehmoment zwischen Eingangsseite (6) und Ausgangsseite (7) übertragen wird, so dass die Ausgangsdrehzahl ($n_A$) abfällt;
     b) Schließen der Kupplung (3) von der ersten Kupplungsstellung ($KS_1$) bis zu einer zweiten Kupplungsstellung ($KS_2$), bei der der Abfall der Ausgangsdrehzahl ($n_A$) gestoppt ist;
     c) Erfassen der zweiten Kupplungsposition ($KS_2$);
     d) Öffnen der Kupplung (3) von der zweiten Kupplungsstellung ($KS_2$) bis zu einer dritten Kupplungsstellung ($KS_3$), bei der die Ausgangsdrehzahl ($n_A$) gleich bleibt oder abfällt;
     e) Erfassen der dritten Kupplungsstellung ($KS_3$); und
     f) Berechnen des Greifpunktes (GP) als Funktion der zweiten Kupplungsstellung ($KS_2$) und der dritten Kupplungsstellung ($KS_3$).

2. Verfahren nach Anspruch 1, **dadurch gekennzeichnet, dass** der Greifpunkt (GP) ein gewichtetes Mittel der zweiten Kupplungsstellung ($KS_2$) und der dritten Kupplungsstellung ($KS_3$) ist.

3. Verfahren nach Anspruch 1 oder 2, **dadurch gekennzeichnet, dass** das Schließen der Kupplung (3) von der ersten Kupplungsstellung ($KS_1$) bis zu der zweiten Kupplungsstellung ($KS_2$) mit einer konstanten Verstellgeschwindigkeit erfolgt.

4. Verfahren nach einem der Ansprüche 1 bis 3, **dadurch gekennzeichnet, dass** das Öffnen der Kupplung nach der zweiten Kupplungsstellung ($KS_2$) bis zu der dritten Kupplungsstellung ($KS_3$) mit einer konstanten Verstellgeschwindigkeit erfolgt.

5. Verfahren nach Anspruch 4, **dadurch gekennzeichnet, dass** die Verstellgeschwindigkeiten zum Schließen der Kupplung bis zur zweiten Kupplungsstellung ($KS_2$) und zum Öffnen der Kupplung nach der zweiten Kupplungsstellung ($KS_2$) bis zu der dritten Kupplungsstellung ($KS_3$) betraglich gleich groß sind.

6. Verfahren nach einem der Ansprüche 1 bis 5, **dadurch gekennzeichnet, dass** der Abstand zwischen der zweiten Kupplungsstellung ($KS_2$) und der dritten Kupplungsstellung ($KS_3$) erfasst wird.

7. Verfahren nach einem der Ansprüche 1 bis 6, **dadurch gekennzeichnet, dass** die zweite Kupplungsstellung ($KS_2$) von einem Zeitpunkt ($t_{10}$) abhängt, in dem die zeitliche Ableitung der Ausgangsdrehzahl ($n_A$) einen Wert gleich Null einnimmt, wenn die Kupplung von der ersten Kupplungsstellung ($KS_1$) aus geschlossen wird.

8. Verfahren nach einem der Ansprüche 1 bis 7, **dadurch gekennzeichnet, dass** die dritte Kupplungsstellung ($KS_3$) von einem Zeitpunkt ($t_{11}$) abhängt, in dem die zeitliche Ableitung der Ausgangsdrehzahl ($n_A$) einen Wert gleich Null annimmt, wenn die Kupplung von der zweiten Kupplungsstellung ($KS_2$) aus geöffnet wird.

9. Verfahren nach einem der Ansprüche 1 bis 8, **dadurch gekennzeichnet, dass** in der zweiten Kupplungsstellung ($KS_2$) und/oder dritten Kupplungsstellung ($KS_3$) die zeitliche Ableitung oder Steigung der Ausgangsdrehzahl ($n_A$) erfasst wird.

10. Verfahren nach einem der Ansprüche 1 bis 9, **dadurch gekennzeichnet, dass** die zeitliche Ableitung der Ausgangsdrehzahl ($n_A$) nach Erreichen der ersten Kupplungsstellung ($KS_1$) ermittelt wird.

11. Verfahren nach einem der Ansprüche 1 bis 10, **dadurch gekennzeichnet, dass** die Kupplung in der zweiten Kupplungsstellung ($KS_2$) und/oder in der dritten Kupplungsstellung ($KS_3$) für jeweils eine gewisse Zeit gehalten wird.

12. Verfahren nach einem der Ansprüche 9 bis 11, **dadurch gekennzeichnet, dass** unter Berücksichtigung des Massenträgheitsmoments der Ausgangsseite (7) der zeitlichen Ableitung der Ausgangsdrehzahl nach Erreichen der ersten Kupplungsstellung ($KS_1$), der zeitlichen Ableitung der Ausgangsdrehzahl in der zweiten bzw. in der dritten Kupplungsstellung ein anliegendes Kupplungsmoment berechnet wird, um unter Zugrundelegung einer Kupplungskennlinie bzw. unter Zugrundlegung der Steigung der Kupplungskennlinie im Greifpunkt (GP) auf den Abstand zwischen zweiter bzw. dritter Kupplungsstellung und dem Greifpunkt (GP) zu schließen.

13. Verfahren nach einem der Ansprüche 1 bis 12, **dadurch gekennzeichnet, dass** die erste Kupplungsstellung ($KS_1$) zwischen einer vermuteten Position für den Greifpunkt (GP) und einer vollständig geöffneten Kupplungsstellung (AK) liegt, wobei sich die erste Kupplungsstellung ($KS_1$) vorzugsweise in der Nähe der vermuteten Position für den Greifpunkt (GP) befindet.

14. Verfahren nach einem der Ansprüche 1 bis 13, **dadurch gekennzeichnet, dass** die Kupplung eine hydraulische Stellvorrichtung aufweist, wobei vorzugsweise bei Nichtanliegen eines hydraulischen Drucks die Kupplung vollständig geschlossen ist.

15. Verfahren nach Anspruch 14, **dadurch gekennzeichnet, dass** zwischen der vorzugsweise vollständig geschlossenen Kupplungsstellung und der ersten Kupplungsstellung ($KS_1$) die hydraulische Stellvorrichtung hydraulisch mit einem Ausgleichsbehälter verbunden wird.

Fig.1

Fig.3

Fig.2

EP 1 741 950 A1

**EP 1 741 950 A1**

**Europäisches Patentamt**

# EUROPÄISCHER RECHERCHENBERICHT

Nummer der Anmeldung

EP 05 10 6134

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 32 18 933 A1 (TRIUMPH-ADLER AKTIENGESELLSCHAFT FUER BUERO- UND INFORMATIONSTECHNIK;) 24. November 1983 (1983-11-24) * Seite 17, Zeile 1 - Seite 20, Zeile 30 * * Abbildungen 1,2 * ----- | 1-11 | F16D48/06 |
| X | DE 199 15 207 A1 (ROBERT BOSCH GMBH) 5. Oktober 2000 (2000-10-05) * Spalte 2, Zeile 24 - Zeile 34 * * Spalte 3, Zeile 25 - Spalte 5, Zeile 45 * * Spalte 6, Zeile 30 - Zeile 57 * ----- | 1-9,13 | |
| A | DE 103 52 611 A1 (ZF FRIEDRICHSHAFEN AG) 2. Juni 2005 (2005-06-02) * Zusammenfassung * * Absätze [0037], [0038] * * Ansprüche 1-5 * * Abbildung 1 * ----- | 1-13 | |
| A | US 6 711 486 B1 (KARLSSON LARS GUNNAR ET AL) 23. März 2004 (2004-03-23) * Spalte 2, Zeile 29 - Spalte 5, Zeile 6 * * Abbildungen 1-3 * ----- | 1,12-15 | RECHERCHIERTE SACHGEBIETE (IPC) F16D |

Der vorliegende Recherchenbericht wurde für alle Patentansprüche erstellt

| Recherchenort | Abschlußdatum der Recherche | Prüfer |
|---|---|---|
| Den Haag | 1. Dezember 2005 | J. Giráldez Sánchez |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**　　　　EP 05 10 6134

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-12-2005

| Im Recherchenbericht angeführtes Patentdokument | | Datum der Veröffentlichung | Mitglied(er) der Patentfamilie | | Datum der Veröffentlichung |
|---|---|---|---|---|---|
| DE 3218933 | A1 | 24-11-1983 | KEINE | | |
| DE 19915207 | A1 | 05-10-2000 | FR | 2791749 A1 | 06-10-2000 |
| | | | IT | MI20000512 A1 | 03-10-2000 |
| | | | JP | 2000326762 A | 28-11-2000 |
| DE 10352611 | A1 | 02-06-2005 | KEINE | | |
| US 6711486 | B1 | 23-03-2004 | AT | 256573 T | 15-01-2004 |
| | | | BR | 0013680 A | 07-05-2002 |
| | | | DE | 60007330 D1 | 29-01-2004 |
| | | | DE | 60007330 T2 | 09-06-2004 |
| | | | EP | 1210243 A1 | 05-06-2002 |
| | | | JP | 2003508700 T | 04-03-2003 |
| | | | WO | 0117815 A1 | 15-03-2001 |
| | | | SE | 517743 C2 | 09-07-2002 |
| | | | SE | 9903117 A | 04-03-2001 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10032366 A1
- DE 10032366

- EP 0635391 B1
- EP 0635391 A